# EUROPEAN PATENT SPECIFICATION

(11) **EP 1 516 502 B1**
(45) Date of publication and mention of the grant of the patent: **19.09.2007**
(21) Application number: 02786837.1
(22) Date of filing: 03.12.2002
(51) Int. Cl.: B60C 23/04

(54) **A METHOD FOR EMBEDDING A RADIO FREQUENCY ANTENNA IN A TIRE**
VERFAHREN ZUM EINBETTEN EINER HOCHFREQUENZANTENNE IN EINEN REIFEN
PROCEDE PERMETTANT D'INCORPORER UNE ANTENNE RADIOFREQUENCE DANS UN PNEUMATIQUE

(30) Priority: 11.06.2002 WO PCT/US02/18411
(43) Date of publication of application: 23.03.2005
(73) Proprietor: Société de Technologie Michelin, 63000 Clermont-Ferrand (FR); Michelin Recherche et Technique S.A., 1763 Granges-Paccot (CH)
(72) Inventor: ADAMSON, John, David, Simpsonville, SC 29681 (US); KELLY, Charles, Edward, Simpsonville, SC 29681 (US); O'BRIEN, George, Phillips, Piedmont, SC 29673 (US)
(74) Representative: Dequire, Philippe Jean-Marie Denis
(86) International application number: PCT/US2002/038411
(87) International publication number: WO 2003/105511

(56) References cited:
- EP-A- 1 049 196
- US-A- 5 541 574
- US-A- 6 062 072
- US-A- 6 147 659

## Description

### BACKGROUND AND SUMMARY

Electronic devices integrated in a tire provide functions such as identification and tracking during manufacture, distribution, and use, and measurement of physical parameters such as pressure and temperature during use of the tire. Many systems utilize radio frequency communication between the tire and the external monitoring or interrogating device. A radio frequency communication link requires one or more antennas.

There are available systems that mount to a surface of the tire or the wheel, or are incorporated in the tire inflation valve EP 1 049 196 A1 discloses a such system. An electronic device and antenna attached directly to a surface of the tire or embedded in a tire structure, that is, in the rubber material, is desirable as providing a permanent, tamper-proof integration. An antenna in direct contact or embedded in the tire, however, presents difficulties. The antenna must radiate radio frequency through the surrounding elastomeric material, which is usually electrically conductive, and which has a relatively high dielectric constant, typically 3 or greater. Conductive material in contact with an antenna tends to dissipate the radio frequency energy traveling on the antenna surface. In addition, conductive dielectric material in contact with an antenna allows radio frequency current to pass between the two adjacent feed points of the antenna, also dissipating radio frequency energy. The problem of dissipation increases with the frequency, and is particularly troublesome at or above very high frequency (130 MHz) operation.

In addition, the antenna, typically a metallic element, must adhere to the rubber material to secure it in place. Further, the antenna material must withstand the cyclic stresses in the functioning tire.

The invention provides a method for embedding a radio frequency antenna in a conductive elastomeric material, such as tire rubber, that allows for very high frequency or higher radio transmission from the antenna. According to the invention, the method comprises the steps of forming an antenna element, coating the antenna element with an insulating coating, the coating having a dielectric constant lower than a dielectric constant of the elastomeric material and embedding the coated antenna element in the elastomeric material. Preferably, the coating is formed at least 0.02 mm thick, and more preferably, at least 0.1 mm thick.

According to another aspect of the invention, the coating material preferably has a surface resistivity of at least 10¹² ohms/sq and a volume resistivity of at least 10⁹ ohms*cm. In addition, the coating material preferably has a dissipation factor less than 0.03.

Alternatively, the antenna may be embedded directly in a rubber material having appropriate electrical properties, that is, a surface resistivity of at least 10¹² ohms/sq, a volume resistivity of at least 10⁹ ohms*cm, and a dissipation factor less than 0.03.

According to another aspect of the invention, the antenna is tuned to compensate for the effect the dielectric elastomeric material has on the resonant frequency of the embedded antenna. The dielectric has the effect of making the antenna appear electrically longer than its physical length. The antenna, accordingly, is shortened, the length being determined by a series of iterations to determine the optimum length alone or with the aid of a network analyzer. Alternatively, the antenna could be adjusted by adding capacitive reactance in series at the feedpoint.

The invention also provides an antenna for embedding in rubber material of a tire suitable for transmission in a frequency range of at least 130 MHz. According to this aspect of the invention, an antenna includes an antenna body and an insulating coating surrounding the antenna body, the insulating coating having a dielectric constant less than a dielectric constant of the rubber material, and preferably less than 3, and having a thickness of at least 0.02 mm.

The antenna body can be any body capable of transmitting radio frequency energy. Advantageously, and preferably for use in a tire because of its durability under fatigue conditions, the antenna body is a wire formed of spring steel, brass coated spring steel, or spring brass. Such materials are capable of surviving the bending and flexing deformations typically experienced by the tire.

According to the invention, the coating material preferably has a surface resistivity of at least 10¹² ohms/sq and a volume resistivity of at least 10⁹ ohms*cm. In addition, the coating material preferably has a dissipation factor less than 0.03.

The invention will be better understood by reference to the following detailed description in conjunction with the appended drawings.

### BRIEF DESCRIPTION OF THE DRAWING FIGURES

Figure 1 is a schematic of an electrical device having an antenna in accordance with the invention;

Figure 2 is a sectional view of a tire showing alternative placements for an electrical device with an antenna in accordance with the invention;

Figure 3 is a graph showing the effect of various insulating materials on the ability of a coated antenna to transmit through tire rubber material at 915 MHz;

Figure 4 is a graph showing the adherence strength of various coating materials; and

Figure 5 is a graph showing results of tuning an antenna and embedding it in an elastomeric material.

### DETAILED DESCRIPTION

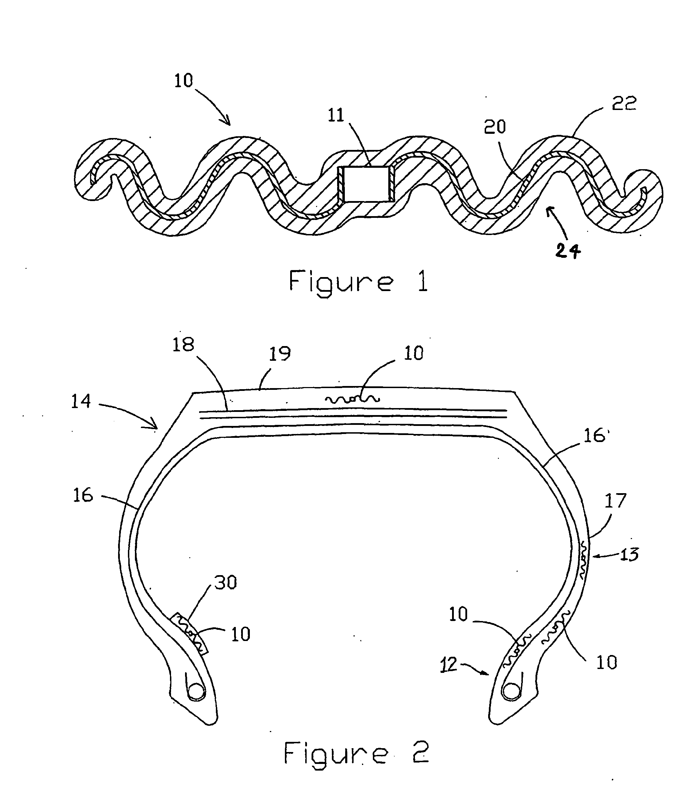

Illustrated in Figure 1 is a radio frequency device 10 for a tire including a radio device 11 and an antenna 24 in accordance with the invention. The radio device 11 itself may be an identification or tracking device, such as may be used in manufacturing, distribution, and sales activities. The device 11 may also be or include a monitoring device for measuring temperature, pressure or other physical parameters in an operating tire. For example, the antenna 24 in such a device is used to transmit to and/or receive from an external device information by radio frequency. As another example, the antenna may also serve to receive energy from an interrogation device. Such radio devices may operate as receivers, transmitters, transponders or reflectors, and, because the antenna of the invention is useful for all these devices, in the following description, the term "radio device" is intended to be inclusive.

As shown in Figure 2, advantageously, the radio frequency device 10 may be positioned in a number of different places in a tire, for example, the tread 19, near the bead 12, or at the tire equator 13. A single tire may include one or several such devices, for example, if it is desired to monitor physical parameters at different locations in the tire or to monitor different parameters. The device 11 and antenna 24 may be embedded in a rubber patch 30 which is adhered to a surface of a tire 14. Alternatively, the radio device 11 and antenna 24 may be embedded in the tire structure itself or layered under rubber material in the tire 14 which forms a surface. For example, the radio frequency device 10 may be positioned between the carcass ply 16 and the inner liner 15, between the carcass play 16 and the sidewall 17, and/or between the belt package 18 and the tread 19. By "integrated" the inventors refer to either manner of incorporating the antenna 24 and radio device 11 in a tire.

Tire rubber material is usually electrically conductive, usually as a result of carbon black and other reinforcing fillers. Direct contact between a radio frequency antenna and tire rubber material is thus deleterious to the ability of the antenna to transmit energy. Radio frequency energy travels along the surface of an antenna, in the so-called "skin effect." Conductive material in contact with the surface of the antenna tends to dissipate the energy through eddy currents. In addition, the conductive dielectric material allows radio frequency energy to pass between the two adjacent feed points of the antenna, which also dissipates energy. The result is a decrease in the effective transmission distance of the antenna. The inventors found that a device comprising a 915 MHz RFID chip having an antenna with a half-wavelength dipole length of 83 mm had a transmission range of 42 inches in air. When embedded in conventional tire rubber, the device had a transmission range of only 4 inches.

To overcome loss of effective range, the antenna 24 in accordance with a first preferred embodiment of the invention includes an antenna element 20 or body and an insulating coating 22. The embodiment shown in Figure 1 illustrates the antenna 20 as having a sinusoidal form, which is advantageous for accommodating tensile forces in the tire material present in tire manufacturing operations and in normal tire operation. The antenna element 20 can be any element capable of transmitting radio frequency energy. For example, and preferably for use in a tire, the antenna element 20 is a wire formed of spring steel, brass coated spring steel, or spring brass. Such materials are able to resist metal fatigue under the cyclic repetitive deformations experienced by a tire structure.

The coating layer 22 is formed of an insulating material and is at least 0.02 mm thick in the uncured state as measured perpendicular to the antenna. This thickness represents an average thickness for the antenna body, which may be determined, for example, by measurement of the volume of material applied to the antenna. The thickness is sufficient to provide spacing between the conductive elastomeric material and the antenna 20 for avoiding bleed-through discharges to the elastomeric material. According to the invention, the coating material has a dielectric constant less than that of the elastomeric material, and preferably less than 3. In addition, the coating material preferably has a surface resistivity of at least 10¹² ohms/sq and a volume resistivity of at least 10⁹ ohms*cm. Further, the coating material preferably has a dissipation factor less than 0.03. The coating material will provide an improvement in the transmission range, and as will be understood below, those skilled in the art may select the coating material and thickness to provide the range necessary for the particular conditions under which the device will be read.

The inventors have found materials useful for forming the coating material to include electrical shrink tubing, thermoplastic polycarbonate, butadiene rubber, low carbon rubber (low carbon being defined to be a rubber mixture having less than 10% carbon black by weight), an isocyanate-based rubber to metal adhesive such as Chemlok (brand) TS3604-50 adhesive (available from Lord Corporation, Chemical Products Division, 2000 West Grand View Boulevard, Erie, Pennsylvania), polyethylene, insulating varnish, epoxy, TPE cellulose acetate, polypara-xylylene (commonly known as "parylene"), and insulating polyester varnish. Such materials have certain advantages, including the ability to apply in the needed thickness. In addition, these coating materials have good adherence with both the antenna material (brass or steel in the described embodiment) and the rubber material of the tire or patch. Thus, an additional adhesive coating or layer is not needed.

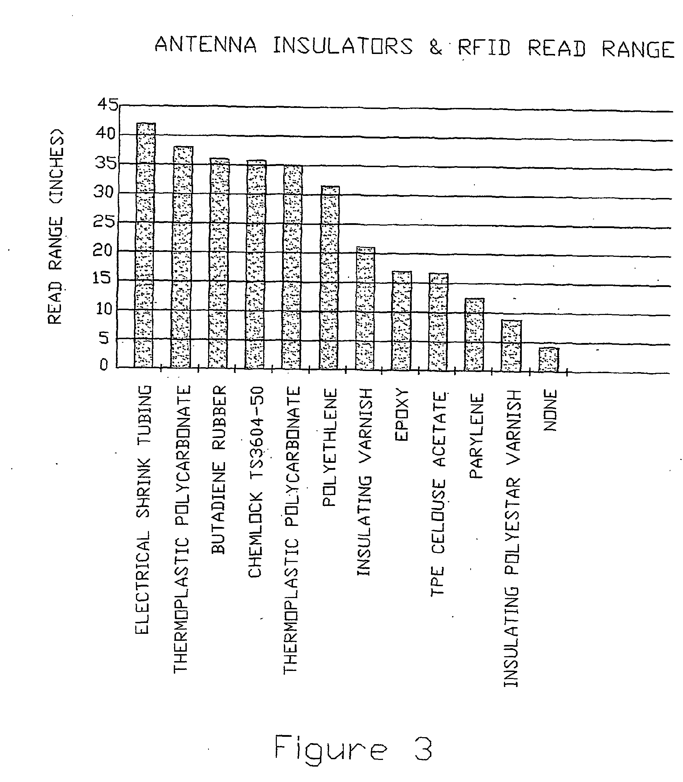

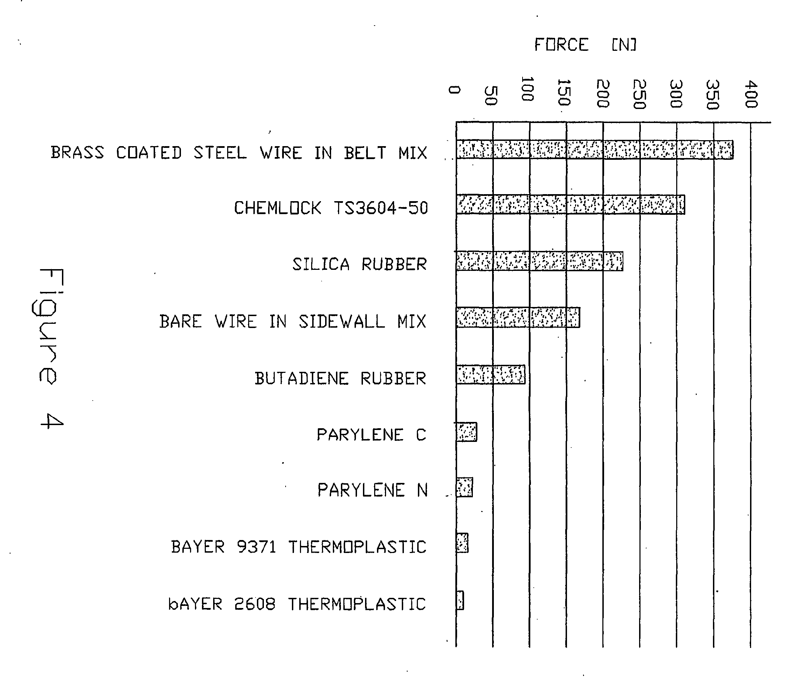

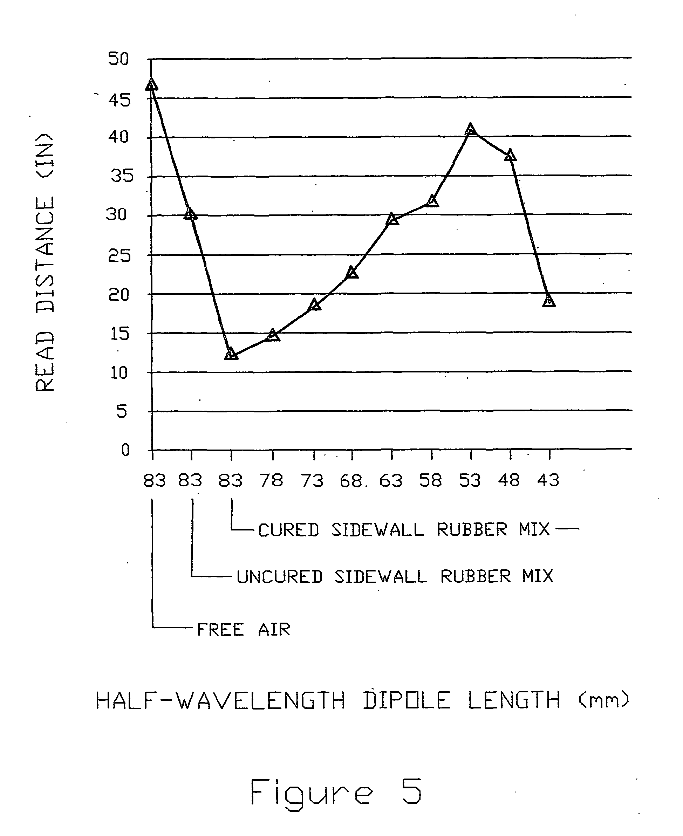

Figure 3 shows the results of exemplary antennas made with various insulating coating materials and embedded in a rubber substrate to simulate incorporation in a tire. The antennas were attached to a 915MHz RFID chip which acted as a transponder. As may be seen from the figure, an uncoated antenna in rubber had a read range of about 4 inches. A first group, including shrink tubing, thermoplastic polycarbonate, butadiene rubber, and Chemlok (brand) TS3604-50 adhesive extended the read range to at least 35 inches. A second group, including insulating varnish, epoxy, TPE cellulose acetate, parylene, and insulating polyester varnish achieved lesser gains, but all were at least double the read range of the uncoated antenna. Upon inspection, it was found that the second group had cracks in the insulation or other deficiencies in the thickness of the coating. Repeat testing with a parylene coating of 0.015 mm achieved a 19 inch read range and with coatings of Chemlock TS3604-50 at 0.5 mm achieved a 9 inch read range, at 1 mm achieved a 18 to 24 inch read range, and 1.5 mm achieved at least a 30 inch read range. The inventors believe that, in general, a coating of any of the appropriate materials with a thickness of at least 0.02 mm is sufficient to obtain a significant gain in read range, with a thickness of at least 0.1 mm being preferred.

Alternatively, the antenna may be coated by skim layers of low carbon rubber. Such low carbon rubber mixes may include filler materials substituting for carbon black, such as silica or clays. A patch for a radio device may be formed entirely of a low carbon rubber, and thus serve as both the antenna coating and the mounting patch.

As yet another alternative, the material of the portion of the tire in which the radio device is to be embedded may itself be formed of a low carbon rubber mix. Thus, a portion of a sidewall of a tire may be formed of a low carbon rubber mix to substitute for a coating for the antenna.

According to another aspect of the invention, the insulating coating acts as an adhesive to bond the antenna to the rubber material. That is, the insulating coating has good adherence to both the antenna material and the tire rubber material. This aspect of the invention simplifies the manufacturing process by eliminating the need for one or two adhesives and the associated application steps. It is not critical, however, that the insulating coating perform this function, and the use of a separate adhesive is within the scope of the invention.

Figure 4 illustrates the results of testing various insulating coatings for adhesion strength in bonding an antenna wire having a brass outer layer (spring brass or brass coated spring steel) in tire rubber. Sample antenna wires were prepared, including an uncoated wire, and wires having, respectively, coatings of a rubber mix used for tire belts, Chemlok TS3604-50 (brand) adhesive, silica rubber, butadiene rubber, parylene C, parylene N, Bayer 9371 (brand) thermoplastic polycarbonate, and Bayer 2608 (brand) thermoplastic polycarbonate (available from Bayer Corporation, 100 Bayer Road, Pittsburgh, Pennsylvania 15205). These prepared antenna wires were cured in a sandwich of sidewall type rubber and carcass ply rubber mix. After cure, a peel test was done, with the resulting force needed to peel the rubber from the antennas shown in Figure 4. The highest peel forces were achieved by the antenna wires coated with belt rubber mix, Chemlok (brand) TS3604-50 adhesive, silica rubber, and the bare wire in a sidewall rubber.

By comparing the results shown in Figure 3 and Figure 4, it is noted that Chemlok (brand) TS3604-50 adhesive had the best combination of insulating characteristic (improvement in read range) and adhesive ability (peel strength).

A further step of preparing an antenna for use in a tire or in a rubber substrate involves re-tuning the antenna to adjust for the effect of embedding it in a dielectric material. Figure 5 shows the results of a test of antennas coated with standard electrical heat shrink tubing, cut to various lengths, and embedded in a typical cured and uncured tire sidewall rubber mix. Again, the antennas were connected to a 915 MHz RFID chip as the transponder. The horizontal axis shows the half-wavelength dipole length of the antenna in millimeters The vertical axis shows the read range in inches. As may be seen, an antenna in free air (not embedded in rubber) has a read range of about 48 inches with a half-wavelength dipole length of 83 mm. In an uncured rubber mix, the same length antenna had a read range of about 30 inches. In a cured rubber mix, the antenna had a read range of 12 inches. Tuning the half-wavelength dipole length to 47 mm restored the read range to 41 inches, and as shown, was the optimum for this configuration.

Tuning may be accomplished through iterations as suggested by Figure 5. Alternatively, a network analyzer could be used to determine the actual resonant frequency of the antenna embedded in the particular rubber to reduce the iterations required to find the optimum length.

Alternatively, the antenna could be adjusted by adding capacitive reactance in series between the antenna and the device at the feedpoint.

A method to embed an antenna in a tire or an elastomeric substrate according to the invention includes the steps of forming an antenna body, coating the body with an insulating coating at least 0.02 mm, and more preferably 0.1 mm thick, and curing the coated antenna body in an elastomeric material. According to a further step, the antenna wire is tuned prior to being embedded in the rubber material according to the procedure described above. Further, the coating material is selected in accordance with the properties described above.

The step of coating the antenna body could be accomplished by repeated dipping steps to build up the coating to the desire layer. Alternatively, the coating could be applied by spraying or other known techniques for applying coatings to wire-like materials. Rubber coatings may be applied by spraying, by preparing the rubber mix in skim layers to envelope the radio device and antenna, or other techniques for applying rubber layers.

The invention has been described in terms of preferred principles, embodiments, and structures for the purposes of description and illustration. Those skilled in the art will understand that substitutions may be made and equivalents found without departing from the scope of the invention as defined by the appended claims.

## Claims

1. A radio frequency device (10) having an antenna (24) embedded in a rubber material (14,30) for operation in a frequency range of at least 130 MHz, comprising:
a radio device (11);
an antenna body (20) connected to said radio device (11); and **characterized by**
an insulating coating (22) surrounding at least the antenna body (20), the insulating coating (22) having a dielectric constant less than a dielectric constant of the rubber material (14,30).

2. The radio frequency device (10) as claimed in claim 1, wherein the coating (22) is at least 0.02 mm thick.

3. The radio frequency device (10) as claimed in claim 2, wherein the coating is at least 0.1 mm thick.

4. The radio frequency device as claimed in any one of claims 1 to 3, wherein dielectric constant of the insulating coating (22) is less than 3.

5. The radio frequency device (10) as claimed in any one of claims 1 to 4, wherein the coating material has a surface resistivity of at least 10¹² ohms/sq, a volume resistivity of at least 10⁹ ohms*cm, and a dissipation factor less than 0.03.

6. The radio frequency device (10) as claimed in any one of claims 1 to 5, wherein the coating material is selected from a group comprising electrical shrink tubing, thermoplastic polycarbonate, butadiene rubber, low carbon rubber, isocyanate based adhesive, polyethylene, insulating varnish, epoxy, TPE cellulose acetate, parylene, and insulating polyester varnish.

7. The radio frequency device as claimed in claim 6, wherein the coating is formed of parylene and is at least 0.015 mm thick.

8. The radio frequency device (10) as claimed in any one of claims 1 to 6, wherein the rubber material forms a patch (30) for attaching to a surface of a tire (14).

9. The radio frequency device (10) as claimed in any one of claims 1 to 6, wherein the rubber material forms a portion of the tire (14).

10. A tire (14) having a radio frequency device (10) with an antenna (24) integrated therein according to any one of claims 1 to 9.

11. A method for embedding a radio frequency antenna (24) in a tire (14), comprising the steps of:
forming an antenna element (20);
coating the antenna element (20) with an insulating coating (22), the coating having a dielectric constant lower than a dielectric constant of an elastomeric material, the coating being formed at least 0.02 mm thick; and,
embedding the coated antenna element (24) in the elastomeric material for integration with the tire (14).

12. The method as claimed in claim 11, wherein, the coating material has a surface resistivity of at least 10¹² ohms/sq, a volume resistivity of at least 10⁹ ohms*cm, and a dissipation factor less than 0.03.

13. The method as claimed in any one of claims 11 and 12, wherein the coating material has a thickness of at least 0.1 mm.

14. The method as claimed in any one of claims 11 to 13, wherein the coating material is selected from a group comprising electrical shrink tubing, thermoplastic polycarbonate, butadiene rubber, low carbon rubber, isocyanate based adhesive, polyethylene, insulating varnish, epoxy, TPE cellulose acetate, parylene, and insulating polyester varnish.

15. The method as claimed in any one of claims 11 to 14, further comprising the step of tuning the antenna (24) for resonant frequency for the elastomeric material.

16. The method as claimed in any one of claims 11 to 15, wherein the elastomeric material is a rubber patch (30), and further comprising the step of adhering the patch to a surface of a tire (14).

17. The method as claimed in any one of claims 11 to 16, wherein the elastomeric material is a portion of a tire (14).

## Patentansprüche

1. Hochfrequenzvorrichtung (10) mit einer in ein Gummimaterial (14, 30) eingebetteten Antenne (24) zum Betrieb in einem Frequenzbereich von wenigstens 130 MHz, umfassend:
eine Funkvorrichtung (11);
einen Antennenkörper (20), der mit der Funkvorrichtung (11) verbunden ist; und **gekennzeichnet durch** eine wenigstens den Antennenkörper (20) umgebende Isolierbeschichtung (22), wobei die Isolierbeschichtung eine Dielektrizitätskonstante besitzt, die kleiner ist als die Dielektrizitätskonstante des Gummimaterials (14, 30)

2. Hochfrequenzvorrichtung (10) nach Anspruch 1, wobei die Beschichtung (22) wenigstens 0,02 mm dick ist.

3. Hochfrequenzvorrichtung (10) nach Anspruch 2, wobei die Beschichtung wenigstens 0,1 mm dick ist.

4. Hochfrequenzvorrichtung (10) nach einem der Ansprüche 1 bis 3, wobei die Dielektrizitätskonstante der Isolierbeschichtung (22) kleiner als 3 ist.

5. Hochfrequenzvorrichtung (10) nach einem der Ansprüche 1 bis 4, wobei das Beschichtungsmaterial einen spezifischen Oberflächenwiderstand von wenigstens 10¹² Ohm/Quadrat, einen spezifischen Volumen-Widerstand von wenigstens 10⁹ Ohm*cm und einen Verlustfaktor von weniger als 0,03 besitzt.

6. Hochfrequenzvorrichtung (10) nach einem der Ansprüche 1 bis 5, wobei das Beschichtungsmaterial aus einer Gruppe ausgewählt wird, umfassend elektrischen Schrumpfschlauch, thermoplastisches Polycarbonat, Butadien-Gummi, niedrig gekohlter Gummi, auf Isocyanat basierter Klebstoff, Polyethylen, Isolierlack, Epoxid, TPE Zelluloseacetat, Parylen und isolierender Polyesterlack.

7. Hochfrequenzvorrichtung nach Anspruch 6, wobei die Beschichtung aus Parylen gebildet ist und wenigstens 0,015 mm dick ist.

8. Hochfrequenzvorrichtung (10) nach einem der Ansprüche 1 bis 6, wobei das Gummimaterial einen Flicken (30) zum Anbringen an eine Fläche eines Reifens (14) bildet.

9. Hochfrequenzvorrichtung (10) nach einem der Ansprüche 1 bis 6, wobei das Gummimaterial einen Abschnitt des Reifens (14) bildet.

10. Reifen (14) mit einer Hochfrequenzvorrichtung (10) mit einer darin integrierten Antenne (24) nach einem der Ansprüche 1 bis 9.

11. Verfahren zum Einbetten einer Hochfrequenzantenne (24) in einen Reifen (14), umfassend die Schritte:
Bilden eines Antennenelementes (20);
Beschichten des Antennenelementes (20) mit einer Isolierbeschichtung (22), wobei die Beschichtung eine Dielektrizitätskonstante besitzt, die kleiner als eine Dielektrizitätskonstante eines elastomeren Materials ist, wobei die Beschichtung wenigstens 0,02 mm dick gebildet wird; und
Einbetten des beschichteten Antennenelementes (24) in das elastomere Material zur Integration mit dem Reifen (14).

12. Verfahren nach Anspruch 11, wobei das Beschichtungsmaterial einen spezifischen Oberflächenwiderstand von wenigstens 10¹² Ohm/Quadrat, einen spezifischen Volumen-Widerstand von wenigstens 10⁹ Ohm*cm und einen Verlustfaktor von weniger als 0,03 besitzt.

13. Verfahren nach einem der Ansprüche 11 und 12, wobei das Beschichtungsmaterial eine Dicke von wenigstens 0,1 mm besitzt.

14. Verfahren nach einem der Ansprüche 11 bis 13, wobei das Beschichtungsmaterial aus einer Gruppe ausgewählt wird, umfassend elektrischen Schrumpfschlauch, thermoplastisches Polycarbonat, Butadien-Gummi, niedrig gekohlter Gummi, auf Isocyanat basierter Klebstoff, Polyethylen, Isolierlack, Epoxid, TPE Zelluloseacetat, Parylen und isolierender Polyesterlack.

15. Verfahren nach einem der Ansprüche 11 bis 14, ferner umfassend den Schritt des Abstimmens der Antenne (24) für Resonanzfrequenz für das elastomere Material.

16. Verfahren nach einem der Ansprüche 11 bis 15, wobei das elastomere Material ein Flicken (30) ist, und ferner umfassend den Schritt des Anklebens des Flickens an eine Fläche eines Reifens (14).

17. Verfahren nach einem der Ansprüche 11 bis 16, wobei das elastomere Material ein Abschnitt eines Reifens (14) ist.

## Revendications

1. Dispositif radiofréquence (10) comprenant une antenne (24) incorporée dans du caoutchouc (14, 30) pour fonctionner dans une plage de fréquence d'au moins 130 MHz, comprenant:
un dispositif radio (11);
un corps d'antenne (20) connecté audit dispositif de radio (11), et **caractérisé par**:
un revêtement isolant (22) entourant au moins le corps d'antenne (20), le revêtement isolant (22) présentant une constante diélectrique inférieure à une constante diélectrique du caoutchouc (14, 30).

2. Dispositif radiofréquence (10) selon la revendication 1, dans lequel l'épaisseur du revêtement (22) est d'au moins 0,02 mm.

3. Dispositif radiofréquence (10) selon la revendication 2, dans lequel l'épaisseur du revêtement (22) est d'au moins 0,1 mm.

4. Dispositif radiofréquence selon l'une quelconque des revendications 1 à 3, dans lequel la constante diélectrique du revêtement isolant (22) est inférieure à 3.

5. Dispositif radiofréquence (10) selon l'une quelconque des revendications 1 à 4, dans lequel la matière de revêtement présente une résistivité de surface d'au moins 10¹² ohms², une résistivité de volume d'au moins 10⁹ ohms*cm, et un facteur de dissipation inférieur à 0,03.

6. Dispositif radiofréquence (10) selon l'une quelconque des revendications 1 à 5, dans lequel la matière de revêtement est sélectionnée dans un groupe comprenant une gaine électrique à retrait, du polycarbonate thermoplastique, du caoutchouc butadiène, du caoutchouc à faible teneur en carbone, un adhésif à base d'isocyanate, du polyéthylène, un vernis isolant, de l'époxy, de l'acétate de cellulose TPE, du parylène et un vernis de polyester isolant.

7. Dispositif radiofréquence selon la revendication 6, dans lequel le revêtement est constitué de parylène et présente une épaisseur d'au moins 0,015 mm.

8. Dispositif radiofréquence (10) selon l'une quelconque des revendications 1 à 6, dans lequel le caoutchouc forme une pièce (30) à fixer à la surface d'un pneu (14).

9. Dispositif radiofréquence (10) selon l'une quelconque des revendications 1 à 6, dans lequel le caoutchouc forme une partie du pneu (14).

10. Pneu (14) comprenant un dispositif radiofréquence (10) comprenant une antenne (24) intégrée dans celui-ci selon l'une quelconque des revendications 1 à 9.

11. Procédé pour incorporer une antenne de radiofréquence (24) dans un pneu (14), comprenant les étapes suivantes:
former un élément d'antenne (20);
revêtir l'élément d'antenne (20) avec un revêtement isolant (22), le revêtement isolant présentant une constante diélectrique inférieure à une constante diélectrique d'une matière élastomère, le revêtement présentant une épaisseur d'au moins 0,02 mm; et
incorporer l'élément d'antenne revêtu (24) dans la matière élastomère pour l'intégrer dans le pneu (14).

12. Procédé selon la revendication 11, dans lequel la matière de revêtement présente une résistivité de surface d'au moins 10¹² ohms², une résistivité de volume d'au moins 10⁹ ohms*cm, et un facteur de dissipation inférieur à 0,03.

13. Procédé selon l'une quelconque des revendications 11 et 12, dans lequel l'épaisseur de la matière de revêtement est d'au moins 0,1 mm.

14. Procédé selon l'une quelconque des revendications 11 à 13, dans lequel la matière de revêtement est sélectionnée dans un groupe comprenant une gaine électrique à retrait, du polycarbonate thermoplastique, du caoutchouc butadiène, du caoutchouc à faible teneur en carbone, un adhésif à base d'isocyanate, du polyéthylène, un vernis isolant, de l'époxy, de l'acétate de cellulose TPE, du parylène et un vernis de polyester isolant.

15. Procédé selon l'une quelconque des revendications 11 à 14, comprenant en outre l'étape consistant à accorder l'antenne (24) à une fréquence de résonance pour la matière élastomère.

16. Procédé selon l'une quelconque des revendications 11 à 15, dans lequel la matière élastomère est une pièce de caoutchouc (30), et comprenant en outre l'étape consistant à coller la pièce sur une surface d'un pneu (14).

17. Procédé selon l'une quelconque des revendications 11 à 16, dans lequel la matière élastomère est une partie d'un pneu (14).
